# EUROPÄISCHE PATENTSCHRIFT

(11) **EP 1 858 433 B1**
(45) Veröffentlichungstag und Bekanntmachung des Hinweises auf die Patenterteilung: **29.08.2012**
(21) Anmeldenummer: 06706639.9
(22) Anmeldetag: 04.02.2006
(51) Int. Cl.: A61C 5/12

(54) **MATRIZENANORDNUNG**
MATRIX DEVICE
DISPOSITIF DE MATRICE

(30) Priorität: 27.10.2005 AT 17572005; 17.02.2005 AT 2612005
(43) Veröffentlichungstag der Anmeldung: 28.11.2007
(73) Patentinhaber: Rus, Harald, 8950 Stainach (AT)
(72) Erfinder: Rus, Harald, 8950 Stainach (AT)
(74) Vertreter: Puchberger, Peter
(86) Internationale Anmeldenummer: PCT/EP2006/000979
(87) Internationale Veröffentlichungsnummer: WO 2006/087110

(56) Entgegenhaltungen:
- EP-A- 0 594 535
- EP-A- 1 008 328
- DE-A1- 19 936 461
- US-A- 2 782 503
- US-A- 3 890 714
- US-A- 4 781 583

## Beschreibung

Die Erfindung betrifft eine Matrizenanordnung für Zahnbehandlungen bestehend aus einer Matrize und mindestens einen Keil.

Die bisher bekannten Matrizenanordnungen für die Verarbeitung von Composite im Mund des Patienten haben alle, unbeachtet ihrer sonstigen Bauform, die Gemeinsamkeit keine Rücksicht auf das zu verarbeitende Material im Mund zu nehmen. Die Matrizen bestehen entweder aus einem festen Material, meistens Metall, oder einem weichen, flexiblen Kunststoff.

Die festen Matrizen eignen sich nur zur Verarbeitung von stopfbarem Material und die weichen Matrizen lassen zwar eine Verarbeitung von nicht stopfbarem Material wie Composite zu, jedoch sind diese nur schwer bis gar nicht in den Interdentalraum einzubringen. Eine weiche Matrize ist deshalb erforderlich, weil nicht stopfbare Materialien von Innen heraus gegen die Matrize modelliert werden, wobei die flexible Matrize nachgibt und eine bauchige Ausformung des zu modellierenden Materials zulässt. Dadurch ist es möglich, den behandelten Zahn derart wiederherzustellen, dass ein sicherer Kontaktpunkt zum Nachbarzahn gebildet wird, und dieser ausreichend unterstützt wird.

Eine zusätzliche Verankerung der Matrize im lnterdentalbereich mit Keilen ist immer notwendig, wie z.B. US6220858 offenbart, um einen dichten Abschluß zum lnterdentalbereich zu erreichen. Die dabei verwendeten Keile nehmen keine Rücksicht auf die Tiefe der präparierten Kavität und Höhe der Papille. Sie lassen somit eine gute Abdichtung der Präparation zum feuchten Milieu in der Mundhöhle häufig nicht zu, was besonders bei der Verarbeitung von Composite zu Problemen führt, da hier eine relative Trockenheit bei der Verarbeitung notwendig ist.

Die Aufgabe der Erfindung ist es, eine Matrizenanordnung zu schaffen, die es ermöglicht eine weiche, flexible Matrize, wie sie für die Verarbeitung von nicht stopfbaren Materialien benötigt wird, einfach in den Interdentalraum einzubringen, sowie diese Matrize in nur einem Arbeitsschritt mittels eines zugehörigen Keils zu fixieren, und so eine sichere Abdichtung zum feuchten Milieu der Mundhöhle hin zu gewährleisten. Weiters ist es eine Aufgabe der Erfindung eine Matrizenanordnung zu schaffen, bei der der Keil derart geformt ist, dass individuelle Unterschiede in der Anatomie des Interdentalraums berücksichtigt werden können.

Gelöst wird dies erfindungsgemäß durch die Matrizenanordnung gemäß Anspruch 1.

Ein Merkmal dieser Erfindung ist es, dass die weiche, flexible Matrize aus einem Kunststoff, welcher für die Verarbeitung nicht stopfbarer Materialien geeignet ist, gefertigt ist, sowie dass der feste, reversibel verformbare Keil aus einem Material mit einem Memory-Effekt oder einer gewissen Elastizität, vorzugsweise aus Titan gefertigt ist. Matrize und Keil können aber auch beide aus dem gleichen Material, zB aus Kunststoff oder einem Festsilikonkautschuk gefertigt sein und somit schon bei der Herstellung miteinander verpresst oder aus einem Teil hergestellt werden und dadurch fest miteinander verbunden sein.

Eine erfindungsgemäße Matrizenanordnung ist derart aufgebaut, dass der Keil an seiner Oberseite einen Schlitz aufweist, in dem die Matrize einklemmbar ist. Der Vorteil einer derartigen Matrizenanordnung ergibt sich darin, dass mit nur einem Arbeitsschritt für den Behandler sowohl die dünne flexible Matrize, als auch der Fixationskeil gleichzeitig in den Interdentalraum eingebracht werden können. Ist der Keil wie in einer bevorzugten Ausführungsform der Erfindung aus Titan gefertigt und weist einen Schlitz an der Oberseite sowie eine Hohlkehle an der Unterseite auf, so kann die flexible Matrize durch Zusammendrücken der beiden Keilschenkel in den somit geweiteten Schlitz eingebracht werden. Durch den Memory-Effekt oder die Elastizität des Keilmaterials formt sich dieser beim Loslassen wieder in seinen Ursprungszustand zurück, wodurch die Matrize fest im Schlitz eingespannt ist.

Ein weiteres Merkmal der Erfindung ist es, dass zumindest eine Schmalseite des Keiles eine Verjüngung aufweist, was das Einbringen in den Interdentalraum erleichtert.

Gemäß einem Merkmal der Erfindung ist die Matrize ein Kunststoffband, welches eine in den Keil einklemmbare Lasche an der Unterkante ausweist, wobei die Unterkante und die Lasche dicker und dadurch weniger flexibel ausgeführt sind, und die Oberkante der Matrize dünner und dadurch flexibler ausgeführt ist, wobei die Dicke der Matrize von der Unter- zur Oberkante hin verlaufend abnehmend ausgeführt ist. Aufgrund der dicker ausgeführten Unterkante und Lasche der Matrize entsteht beim Einbringen in den Keil eine kraftschlüssige, sichere Klemmverbindung. Des weiteren wird durch die nach oben hin verlaufende Dickenabnahme der Matrize gewährleistet, dass die Matrizenanordnung einerseits stabil genug ist, um in den Interdentalraum eingeschoben zu werden, und auf der anderen Seite in der Nähe der präparierten Kavität flexibel genug ist, um ein Verarbeiten von nicht stopfbaren Material zu ermöglichen.

Ferner kann eine erfindungsgemäße Matrizenanordnung derart ausgeführt sein, dass die Matrize an den Seiten aus je zwei flexiblen Flügeln besteht, die in einem Mittelteil der Matrize zusammenlaufen und mit einer gemeinsamen Lasche an der Unterkante in den Keil einklemmbar sind. Eine derartige Anordnung ermöglicht es, zwei benachbarte Zähne mit nur einer Matrizenanordnung gleichzeitig zu behandeln. Dies hat den Vorteil, dass man weitere Arbeitsschritte sowie Behandlungszeit einsparen kann, da es bisher nur möglich und erforderlich war jeden Zahn einzeln zu behandeln.

An Stelle einer doppel-Y-förmigen Matrize mit vier flexiblen Flügel an den Seiten können natürlich erfindungsgemäß auch zwei dünne Matrizen gemeinsam in einem geschlitzten Keil eingeklemmt werden.

Erfindungsgemäß kann die Matrizenanordnung auch derart ausgeführt sein, dass die Matrize aus einem festen Matrizenteil, vorzugsweise aus Metall besteht, wobei ein weicher, flexibler Matrizenteil, vorzugsweise aus Kunststoff in einer Ausnehmung der Matrize angeordnet ist. Der feste Matrizenteil kann dabei beispielsweise aus einem verformbaren Metall, zB aus stark zinkhältigem Metall, gefertigt sein, was es möglich macht die Matrize an den Zahn anzuformen. Dadurch würde eine zusätzliche Sicherung durch einen Sprengring nicht mehr benötigt.

Ferner, aber nicht erfindungsgemäß, kann die Matrize auch als fester Ring, z.B. aus Metall, ausgeführt sein, der um einen Zahn spannbar ist, wobei der Keil in diesem Fall lose als eigener Bauteil zum Einsatz kommt. Auch bei dieser Ausführungsform hat man den Vorteil, dass der weiche, flexible Matrizenteil einfach mit Hilfe eines festen Matrizenteils oder des Metallrings in den Interdentalraum einzubringen und zu fixieren ist.

Erfindungsgemäß ist die Matrizeanordnung als Kreis- oder wiegeförmiges Plättchen ausgebildet.

In dem Fall, in dem die Matrize förmig ausgebildet ist, ist der Keil entlang zumindest eines Teils des Umfangs der Matrize angeordnet ist. In dem Fall, in dem die Matrize als ein wiegeförmiges Plättchen ausgebildet ist, ist der Keil an einer bogenförmigen Unterkante der Matrize angeordnet ist.

Des weiteren kann der Keil an seiner Unterseite eine Hohlkehle aufweisen, die zur Aufnahme der Papille dient. Zusätzlich zu der an der Unterseite des Keiles befindlichen Hohlkehle, können die Schenkel des Keiles erfindungsgemäß unterschiedlich lang ausgebildet sein, wodurch es möglich ist, die anatomischen Unterschiede individueller Interdentalräume zu berücksichtigen, und ein sicheres Abdichten der präparierten Kavität zur Mundhöhle hin zu ermöglichen.

Der entsprechende Keil kann vorteilhafterweise von einer Spitze aus in seiner Breite, Höhe und Schenkellänge zunehmend ausgebildet sein, was es ermöglicht eine einzige Matrizenanordnung für unterschiedliche Interdentalabstände zu verwenden.

Besonders vorteilhaft ist der in der Dicke, Höhe und Schenkellänge zunehmende Keil bei Anordnung desselben an einer bogenförmigen Matrize, wie dies bei dem wiegeförmigen Plättchen oder bei der kreisförmigen Matrize der Fall ist. Bei dieser Anordnung ist die Steilheit der Zunahme des Keiles geringer als dies bei einem Keil mit gerader Oberkante, der Fall wäre, wodurch der Keil mit der entsprechenden Matrize leichter in den Interdentalraum einzubringen ist. Ein weiterer Vorteil einer wiegeförmigen oder kreisförmigen Matrize ist, dass bei besonders tiefen Kavitäten am Rande des Interdentalraums das Zahnfleisch beim Einbringen der Matrizen im Weg sein kann. Durch einen entsprechenden Radius an der Matrize kann diese deshalb an den jeweiligen Stellen die nötige Tiefe erreichen, um die Kavität sicher abzudichten.

Als ein weiteres Merkmal können an der Matrize zusätzliche Verdickungen oder Griffe zur einfacheren Manipulation beim Einbringen und Entfernen der Matrize angeordnet sein.

Weitere vorteilhafte Merkmale werden im folgenden, in der Beschreibung, den Ansprüchen und den Zeichnungen näher ausgeführt.

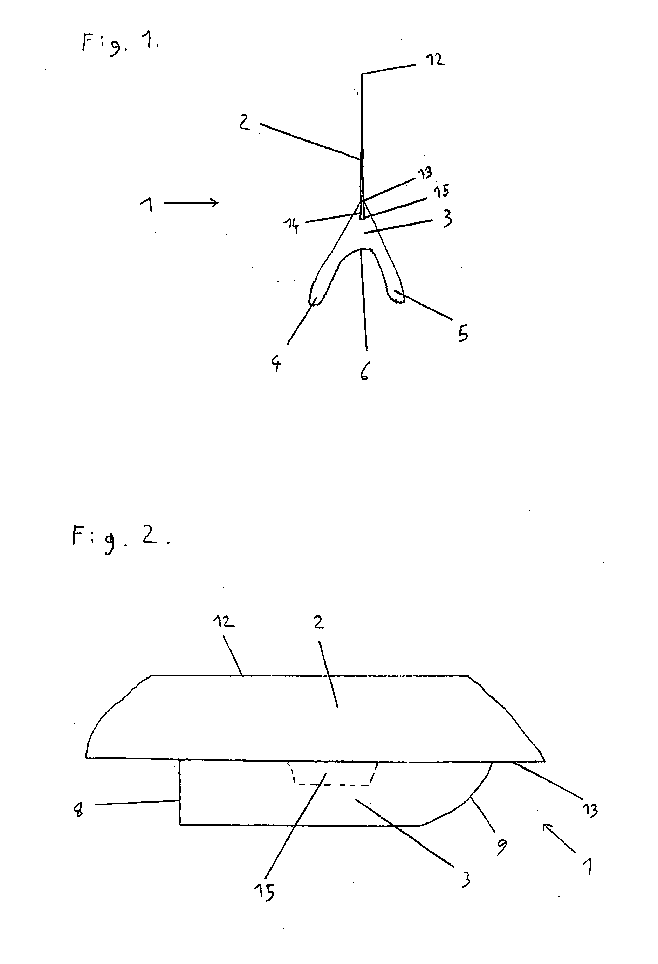

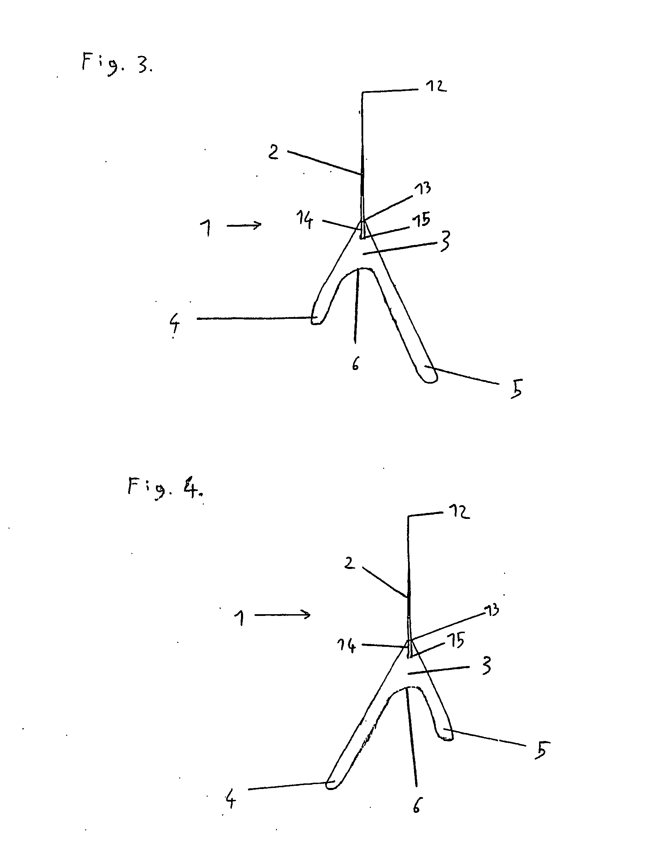

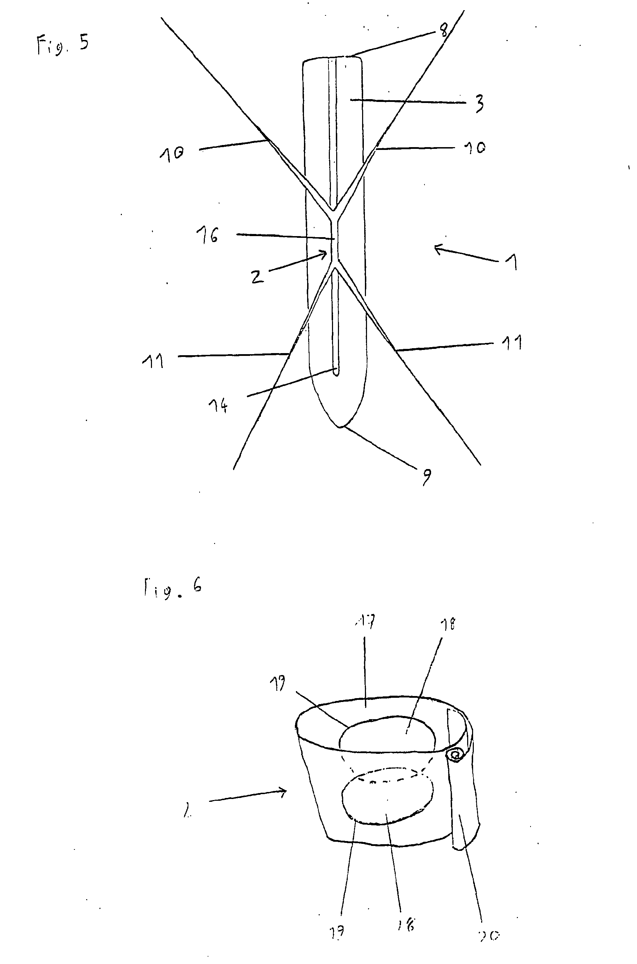

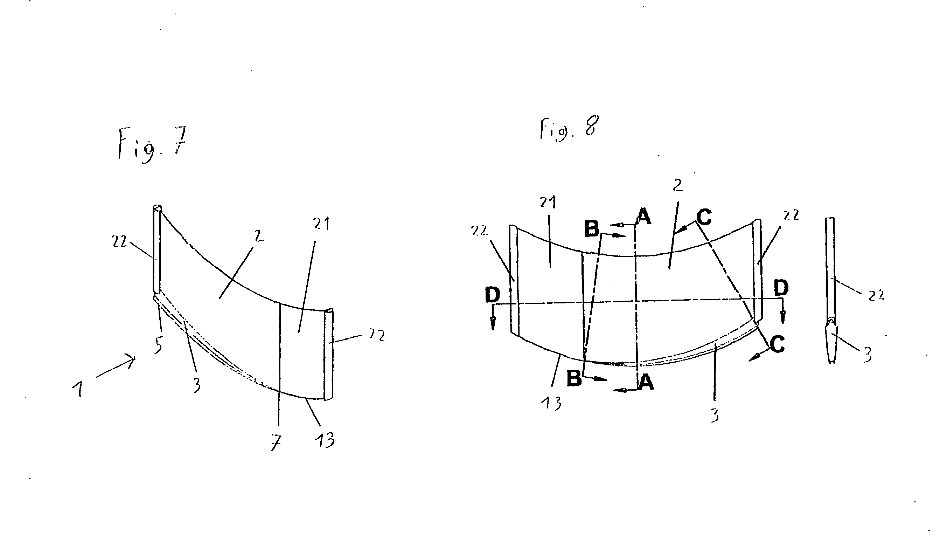

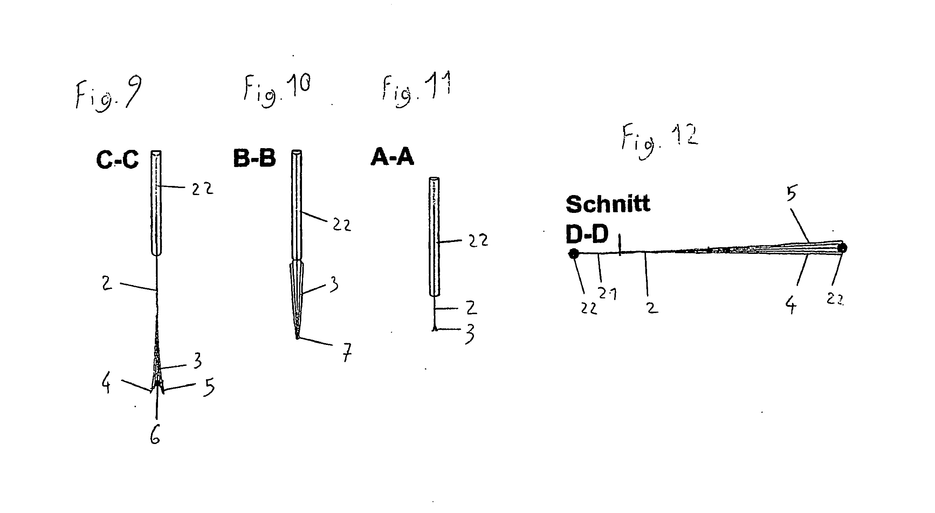

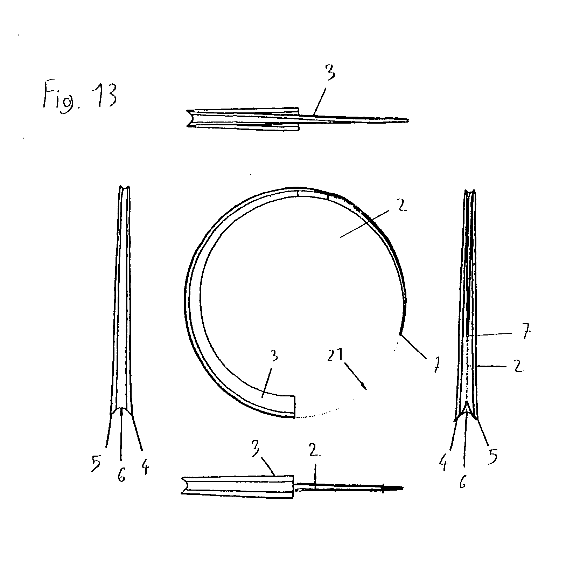

Fig. 1 zeigt einen Querschnitt durch eine Matrizenanordnung. Fig. 2 zeigt eine Seitenansicht der erfindungsgemäßen Matrizenanordnung. In Fig. 3 ist ein Querschnitt einer Matrizenanordnung mit unterschiedlich langen Keilschenkeln zu sehen. Fig. 4 zeigt eine weitere Ausführungsform einer Matrizenanordnung mit unterschiedlich langen Keilschenkeln. Fig. 5 zeigt eine Aufsicht auf eine Matrizenanordnung mit einer vier-flügeligen Matrize. Fig. 6 zeigt eine Schrägansicht einer Matrize in Form eines Metallrings. Fig. 7 zeigt eine Schrägansicht einer erfindungsgemäßen wiegeförmigen Matrizenanordnung. Fig. 8 zeigt eine Aufsicht auf eine erfindungsgemäßen wiegeförmige Matrizenanordnung gemäß Fig. 7 mit daran angeordneter Seitenansicht. Fig. 9 zeigt einen Schnitt nach der Linie CC aus Fig. 8. Fig. 10 zeigt einen Schnitt nach der Linie B-B aus der Fig. 8. Fig. 11 zeigt einen Schnitt nach der Linie A-A aus der Fig. 8. Fig. 12 zeigt einen Schnitt nach der Linie D-D aus der Fig. 8. Fig. 13 zeigt eine Aufsicht auf eine kreisförmige Matrizenanordnung mit jeweils zugeordneten Seitenansichten.

Die in Fig. 1 gezeigte Matrizenanordnung 1 besteht aus einer Matrize 2 und einem dazugehörigen Keil 3. Die Matrize 2 kann z.B. aus einem Kunststoffband gefertigt sein, welches industriell einfach und kostengünstig hergestellt werden kann. Die Matrize 2 ist an der Oberkante 12 dünn und flexibel ausgeführt und wird zur Unterkante 13 hin und nach lingual und bukkal verlaufend dicker. Der Keil 3 weist an seiner Oberseite einen Schlitz 14 auf, in dem die Matrize 2 mittels der Lasche 15 eingeklemmt ist. Des weiteren ist die Unterseite des Keiles als Hohlkehle 6 ausgeführt, wodurch ein linker Schenkel 4 und ein rechter Schenkel 5 gebildet werden.

Fig. 2 zeigt eine Seitenansicht der Matrizenanordnung 1, bestehend aus der Matrize 2 und dem Keil 3. Der Keil 3 ist in diesem Ausführungsbeispiel an einer Schmalseite 8 gerade ausgeführt, und weist auf der anderen Schmalseite eine Verjüngung 9 auf, was es ermöglicht die Matrizenanordnung 1 einfacher in den Interdentalraum einzubringen. Die Matrize wird nur durch die Lasche 15 in den Keil 3 eingeklemmt, was es ermöglicht, die weiche Matrize 2 an den Zahn anzuformen und mittels eines Sprengrings zu befestigen, um die präparierte Kavität nach allen Seiten hin sicher abzudichten.

Die Figuren 3 und 4 zeigen jeweils einen Querschnitt durch eine Matrizenanordnung 1 bei der der Keil 3 unterschiedlich lange Schenkel 4, 5 aufweist. Beim Beispiel des in Fig. 3 gezeigten Keils ist der rechte Schenkel 5 länger als der linke Schenkel 4. Bei dem in Fig. 4 gezeigten Ausführungsbeispiel handelt es sich um eine genau spiegelbildliche Ausführungsform, bei der der linke Schenkel 4 länger als der rechte Schenkel 5 ist. Prinzipiell kann man durch die Verwendung von drei unterschiedlichen Ausführungen von Keilformen, wie die in Fig. 1, 3 und 4 gezeigten, die meisten individuellen Unterschiede der Anatomie der Interdentalräume berücksichtigen und bei jeder Behandlung ein sicheres Abdichten der präparierten Kavität gewährleisten.

Fig. 5 zeigt eine Aufsicht auf eine Matrizenanordnung 1 mit einer Matrize 2, die an den Seiten jeweils zwei Flügel 10,11 aufweist. Die vier Flügel 10,11 laufen in einem gemeinsamen Mittelteil 16 der Matrize 2 zusammen. An der Unterkante des Mittelteils 16 befindet sich die Lasche 15 mit der die Matrize 2 im Schlitz 14 des Keils 3 eingeklemmt ist. Mittels einer derartigen Anordnung ist es möglich, zwei benachbarte Zähne gleichzeitig zu behandeln, was zu einer erheblichen Zeitersparnis führt.

Die in Fig. 6 gezeigte Schrägansicht zeigt eine ringförmige Matrize 2, die aus einem festen Matrizenteil 17, z.B. aus Metall, gebildet wird, in dem ein weicher Matrizenteil 18, z.B. aus Kunststoff, in einer Ausnehmung 19 angeordnet ist. In dem gezeigten Ausführungsbeispiel sind zwei runde Ausnehmungen 19 an jeder Seite der Matrize 2 vorgesehen. Es versteht sich, dass die Ausnehmungen 19 auch jede andere Form haben können. Je nachdem wie die präparierte Kavität aussieht, kann die Ausnehmung 19 die jeweils geeignete Form aufweisen. Durch das Anbringen einer Klemme (nicht gezeigt) und das festziehen der Matrize 2 über die Spann-Spule 20 wird die Matrize 2 eng an den Zahn angelegt. Zusätzlich wird die Matrize 2 noch durch Keile im Interdentalraum gesichert.

Fig. 7 zeigt eine Schrägansicht einer erfindungsgemäßen wiegeförmigen Matrizenanordnung 1, bei der die Matrize 2 in Form eines wiegeförmigen Plättchens vorgesehen ist. An ihrer Unterkante 13 ist ein Keil 3 entlang des Bogens angeordnet. Der Keil ist von einer Spitze 7 aus in seiner Breite, Höhe und Schenkellänge zunehmend ausgebildet. An einem Ende der Matrize 2 befindet sich ein Matrizenabschnitt 21, der dünn ausgeführt ist und zum Einbringen in den Interdentalraum dient. An den beiden seitlichen Enden der Matrize 2 befinden sich Verstärkungen 22 die die Manipulation der Matrize erleichtern.

Die Fig. 8 bis 12 zeigen eine Aufsicht sowie entsprechende Schnittdarstellungen der in Fig. 7 gezeigten erfindungsgemäßen wiegeförmigen Matrizenanordnung 1. Bei dem in Fig. 9 gezeigten Schnitt sind ebenfalls die linken und rechten Schenkel 4, 5 sowie die Hohlkehle 6 des Keiles zu sehen. Bei dieser Ausführungsform sind die Schenkel 4, 5 gleich lang ausgebildet, sie können aber auch erfindungsgemäß unterschiedlich lang sein, um den jeweiligen anatomischen Besonderheiten der unterschiedlichen Interdentalräume gerecht zu werden.

Fig. 13 zeigt eine erfindungsgemäße kreisförmige Matrizenanordnung 1 bei der der Keil 3 entlang des Kreisumfanges der Matrize 2 angeordnet ist. Der Keil ist dabei wiederum von einer Spitze 7 aus in seiner Breite, Höhe und Schenkellänge zunehmend ausgebildet. Zum Einbringen in den Interdentalraum ist ebenfalls ein dünner Matrizenabschnitt 21 vorgesehen. Nach dem Einbringen der Matrize 2 wird durch Drehen der Anordnung 1 der Keil 3 von der Spitze 7 her in den Interdentalraum geschoben, bis eine Keildicke erreicht ist, die den jeweiligen Interdentalraum ausfüllt und die Kavität damit ausreichend abdichtet. Bei der gezeigten Ausführungsform sind die Schenkel 4, 5 ebenfalls gleichlang ausgebildet. Sie können aber wie bei allen anderen Ausführungsformeln, je nach anatomischer Gegebenheit unterschiedlich lang ausgebildet sein.

## Patentansprüche

1. Matrizenanordnung für Zahnbehandlung bestehend aus einer Matrize und mindestens einem Keil, wobei eine aus einem weichen flexiblen Material gefertigte Matrize (2) mit einem festen, reversibel verformbaren Keil (3) zu einem einzigen Bauteil miteinander verbunden ist, **dadurch gekennzeichnet, dass** die Matrize (2) als kreis- oder wiegeförmiges Plättchen ausgebildet ist, wobei der Keil (3) entlang zumindest eines Teils des Umfanges der kreisförmigen Matrize (2) oder zumindest entlang eines Abschnitts an einer bogenförmigen Unterkante (13) der wiegeförmigen Matrize (2) angeordnet ist.

2. Matrizenanordnung nach Anspruch 1, **dadurch gekennzeichnet, dass** die weiche flexible Matrize (2) aus einem Kunststoff, geeignet zur Verarbeitung nicht stopfbarer Materialien, gefertigt ist.

3. Matrizenanordnung nach Anspruch 1 oder 2, **dadurch gekennzeichnet, dass** der feste, reversibel verformbare Keil (3) aus einem Material mit einem Memory-Effekt oder einer gewissen Elastizität, vorzugsweise aus Titan, gefertigt ist.

4. Matrizenanordnung nach einem der Ansprüche 1 bis 3, **dadurch gekennzeichnet, dass** Matrize (2) und Keil (3) aus dem gleichen Material, z.B. aus einem Festsilikonkautschuk, gefertigt sind.

5. Matrizenanordnung nach einem der Ansprüche 1 bis 4, **dadurch gekennzeichnet, dass** der Keil (3) in seiner bogenförmigen Längsrichtung eine Verjüngung (9) aufweist.

6. Matrizenanordnung nach einem der Ansprüche 1 bis 5, **dadurch gekennzeichnet, dass** an der Matrize (2) zusätzliche Verdickungen oder Griffe (22) zur einfacheren Manipulation angeordnet sind.

7. Matrizenanordnung nach einem der Ansprüche 1 bis 6, **dadurch gekennzeichnet, dass** der Keil (3) an seiner Unterseite eine Hohlkehle (6) zur Aufnahme der Papille aufweist.

8. Matrizenanordnung nach einem der Ansprüche 1 bis 7, **dadurch gekennzeichnet, dass** die Schenkel (4, 5) des Keiles (3) gleich oder unterschiedlich lang ausgebildet sind.

9. Matrizenanordnung nach einem der Ansprüche 1 bis 8, **dadurch gekennzeichnet, dass** der Keil (3) von einer Spitze (7) aus in seiner Breite, Höhe und Schenkellänge zunehmend ausgebildet ist.

## Claims

1. Matrix device for dental treatment, consisting of a matrix and at least one wedge, wherein a matrix (2) made of a soft flexible material is connected to a solid, reversibly deformable wedge (3) to form a single component, **characterised in that** the matrix (2) is embodied as a circular or cradle-like plate, the wedge (3) being arranged along at least part of the circumference of the circular matrix (2) or at least along a section on an arcuate lower edge (13) of the cradle-like matrix (2).

2. Matrix device according to claim 1, **characterised in that** the soft flexible matrix (2) is made of a plastics suitable for working with non-packable materials.

3. Matrix device according to claim 1 or 2, **characterised in that** the solid, reversibly deformable wedge (3) is made from a material having a memory effect or a certain elasticity, preferably titanium.

4. Matrix device according to one of claims 1 to 3, **characterised in that** the matrix (2) and wedge (3) are made from the same material, e.g. a solid silicone rubber.

5. Matrix device according to one of claims 1 to 4, **characterised in that** the wedge (3) has a taper (9) in its arcuate longitudinal direction.

6. Matrix device according to one of claims 1 to 5, **characterised in that** additional thickened portions or handles (22) are disposed on the matrix (2) to assist with manipulation.

7. Matrix device according to one of claims 1 to 6, **characterised in that** the wedge (3) has, on its underside, a hollow throat (6) for accommodating the papilla.

8. Matrix device according to one of claims 1 to 7, **characterised in that** the legs (4, 5) of the wedge (3) are of identical or different lengths.

9. Matrix device according to one of claims 1 to 8, **characterised in that** the wedge (3) is configured to increase in width, height and leg length starting from a tip (7).

## Revendications

1. Système de matrice pour soins dentaires, constitué d'une matrice et d'au moins un coin, dans lequel une matrice (2), réalisée à partir d'un matériau souple et malléable, est reliée à un coin (3) solide, pouvant être déformé de manière réversible, pour constituer un élément unique, **caractérisé en ce que** la matrice (2) est réalisée en tant que plaquette circulaire ou en forme de bascule, le coin (3) étant disposé au moins le long d'une partie de la circonférence de la matrice (2) circulaire ou au moins le long d'une portion d'un bord inférieur (13) arqué de la matrice (2) en forme de bascule.

2. Système de matrice selon la revendication 1, **caractérisé en ce que** la matrice (2) souple et malléable est réalisée à partir d'une matière synthétique, se prêtant à la mise en oeuvre de matériaux n'autorisant pas de bourrage.

3. Système de matrice selon la revendication 1 ou 2, **caractérisé en ce que** le coin (3) solide, pouvant être déformé de manière réversible, est réalisé à partir d'un matériau à mémoire de forme ou présentant une certaine élasticité, de préférence à partir de titane.

4. Système de matrice selon une des revendications 1 à 3, **caractérisé en ce que** la matrice (2) et le coin (3) sont réalisés à partir du même matériau, par exemple à partir d'un caoutchouc au silicone solide.

5. Système de matrice selon une des revendications 1 à 4, **caractérisé en ce que** le coin (3) présente un effilement (9) dans sa direction longitudinale arquée.

6. Système de matrice selon une des revendications 1 à 5, **caractérisé en ce que** des parties de plus forte épaisseur ou des zones de préhension (22) supplémentaires sont disposées sur la matrice (2) pour faciliter la manipulation.

7. Système de matrice selon une des revendications 1 à 6, **caractérisé en ce que** le coin (3) présente sur sa face inférieure une cannelure (6) destinée à recevoir la papille.

8. Système de matrice selon une des revendications 1 à 7, **caractérisé en ce que** les branches (4, 5) du coin (3) présentent des longueurs identiques ou différentes.

9. Système de matrice selon une des revendications 1 à 8, **caractérisé en ce que** le coin (3) est réalisé de façon à augmenter en largeur, hauteur et longueur de branches, en partant d'une pointe (7).
